# EUROPÄISCHE PATENTSCHRIFT

(11) **EP 3 066 704 B1**
(45) Veröffentlichungstag und Bekanntmachung des Hinweises auf die Patenterteilung: **04.07.2018**
(21) Anmeldenummer: 14789808.4
(22) Anmeldetag: 23.10.2014
(51) Int. Cl.: H01M 2/10, H01M 10/647, H01M 10/6555

(54) **BATTERIEMODUL**
BATTERY MODULE
MODULE DE BATTERIE

(30) Priorität: 04.11.2013 DE 102013222293
(43) Veröffentlichungstag der Anmeldung: 14.09.2016
(73) Patentinhaber: Robert Bosch GmbH, 70442 Stuttgart (DE)
(72) Erfinder: STEIL, Michael, 70825 Korntal-Muenchingen (DE)
(86) Internationale Anmeldenummer: PCT/EP2014/072698
(87) Internationale Veröffentlichungsnummer: WO 2015/062945

(56) Entgegenhaltungen:
- EP-A2- 2 479 835
- WO-A1-2012/105160

## Beschreibung

### Stand der Technik

DE 10 2010 022 908 A1 bezieht sich auf eine Batterie mit Temperaturerfassung und eine Verwendung einer derartigen Batterie. Die Batterie umfasst mehrere elektrische parallel und/oder seriell miteinander verschaltete Flachzellen. Diese sind quer zu ihren Flachseiten aneinander gereiht und bilden eine im Wesentlichen prismatische Anordnung. Um während des Betriebs der Batterie genauere Informationen über den Zustand der einzelnen Flachzellen zu gewinnen und beispielsweise für ein angepasstes Temperaturmanagement ausnutzen zu können, ist in der Anordnung an wenigstens einer Flachseite mehrerer der Flachzellen jeweils eine thermisch angebundene Wärmeabfuhrplatte vorgesehen, in welcher jeweils wenigstens ein Temperatursensor integriert ist.

Die Wärmeabfuhrplatten können beispielsweise aus zwei Teilen gefertigt sein, wobei in einem Teil Vertiefungen zur Aufnahme der Temperatursensoren und der Anschlussleitung vorgesehen sind. Die beiden Teile der Wärmeabfuhrplatte werden über Befestigungsmittel, wie beispielweise Rastzapfen und korrespondierende Rastöffnungen miteinander verbunden. Die Abfuhrplatten können des Weiteren zur mechanischen Fixierung der Batteriezellen eingesetzt werden, wobei die Batteriezelle mit der Platte beispielsweise durch eine Verschraubung und/oder eine wärmeleitende Verklebung verbunden wird. In einer weiteren Ausführungsform ist vorgesehen, die Wärmeabfuhrplatten mit einem Kühlblock zu verbinden. Zwischen zwei Batteriezellen kann ein Luftspalt oder eine Kühlmittelpassage vorgesehen sein.

US 2005/0210662 A1 offenbart ein Verfahren zur Herstellung von Lithium-Polymerbatterien mit hoher Kapazität und ein mit diesen verbundenes Kühlsystem. Das Kühlsystem umfasst eine Vielzahl von Röhren, die zwischen den einzelnen Batteriezellen verlaufen. Den einzelnen Batteriezellen sind Temperatursensoren zugeordnet. Die Temperatursensoren steuern einen Lüfter, der einen Luftstrom durch die Röhren treibt, um die Batteriezellen je nach Bedarf.zu kühlen.

DE 10 2010 055 612 A1 offenbart eine Vorrichtung zur Erfassung der Temperatur von Batterieeinzelzellen. Die Vorrichtung dient zur Erfassung der Temperatur von Batterieeinzelzellen, welche über Stromableiter und/oder Stromschienen zu einer Batterie verschaltet sind. Die Vorrichtung weist Temperatursensoren auf, welche im Bereich der Batterieeinzelzellen angeordnet sind. Außerdem weist sie eine Spannungsmessung für jede der Batterieeinzelzellen auf, welche jeweils über einen elektrischen Kontakt mit jeweils einer der Elektroden jeder der Batterieeinzelzellen in Kontakt stehen. Auf jedem der elektrischen Kontakte ist ein Temperatursensor angeordnet.

EP 2 479 835 A2 zeigt ein Batteriemodul mit zumindest zwei Batteriezellen, wobei ein Temperatursensor in einem Zwischenstück zwischen den Batteriezellen angeordnet ist. Dabei weist das Zwischenstück eine Ausnehmung zur Aufnahme des Temperatursensors auf.

WO 2012/105160 A1 zeigt ein Batteriemodul mit einer Vielzahl von Batteriezellen zwischen denen jeweils ein Trennmittel zur elektrischen Isolierung der Batteriezellen voneinander angeordnet ist.

Heutige Batteriesysteme für Elektrofahrzeuge und Hybridfahrzeuge umfassen prismatische, zylindrische oder Pouch-Sekundärzellen. Die heute größtenteils eingesetzten Batteriezellenarten weisen in der Regel einen Anschluss an ihrem Gehäuse beziehungsweise an ihrer Hülle auf, der die negative Anode und die positive Kathode der Sekundärzelle vom Inneren der Batteriezelle nach außen führt. Üblicherweise beinhalten prismatische Lithium-Sekundärzellen sogenannte Wickel (Jelly Rolls), in denen Anode, Separator und Kathode schichtweise und in aufgewickeltem Zustand in das Gehäuse der Batteriezelle eingebracht sind. Die Wickel werden im Zellinneren metallisch kontaktiert und wie oben bereits erwähnt, über Anschlusspole aus dem Gehäuse der Batteriezelle herausgeführt.

Es können mehrere Batteriezellen parallel geschaltet sein, um eine höhere Leistung bzw. einen höheren Energieinhalt zu realisieren. Dies geschieht beispielweise durch Verwendung von Zellverbindern, mit welchen mehrere Batteriezellen elektrisch parallel geschaltet werden. Die Zellverbinder werden letztendlich dazu verwendet, um die Batteriezellen oder Gruppen von parallel geschalteten Batteriezellen seriell zueinander zu schalten, um eine ausreichend hohe Spannung, beziehungsweise eine ausreichend hohe elektrische Leistung für den jeweiligen Einsatz bereit zu stellen.

In der Regel werden mehrere Batteriezellen zu einem Batteriemodul zusammengefasst. Das Batteriemodul umfasst im Regelfall einen Modul-Controller (CSC). Der Modul-Controller (CSC) misst Batteriezellenspannungen und Batteriezellentemperaturen. Mehrere Batteriemodule werden wiederum miteinander zu einem Batteriepack verbunden. Dieses Batteriepack beinhaltet eine Batteriesteuerungseinheit (BCU), welche die Daten der Modul-Controller auswertet und die Kommunikationsschnittstelle zum Fahrzeug darstellt. Weiterhin sind üblicherweise im Batteriepack Relais, Sicherungen, ein Kühlsystem, ein Entgasungssystem, eine Niedervoltschnittstelle, verschiedene Strommessungsinstanzen und Sicherheitskreise enthalten.

Es ist von großer Bedeutung, die Temperaturen, die in den Batteriezellen auftreten, möglichst genau zu erfassen, da diese zusammen mit Strom und Spannung die wichtigsten sicherheitsrelevanten Messgrößen darstellen, anhand derer ein Batteriemanagementsystem ein Batteriepack regelt und mit dem Fahrzeug kommuniziert. Bei bisher aus dem Stand der Technik bekannten Lösungen werden Temperatursensoren in der Regel an den Zellverbindern angebracht. Damit einher geht der Nachteil, dass die Zellverbinder und auch die Zellterminals der Batteriezellen eine mitunter nicht zu vernachlässigende thermische Kapazität und einen thermischen Widerstand aufweisen können, so dass die durch die Temperatursensoren am Zellverbinder gemessene Temperatur sehr ungenau die eigentliche Temperatur der Batteriezelle darstellt, ein Temperaturverlauf nur verzögert dargestellt werden kann und die Amplitude erheblich niedriger ausfallen kann.

Temperaturmesspunkte direkt auf die Gehäuse der Batteriezellen aufzubringen, stellt produktionstechnisch eine Herausforderung dar, ferner ist die Haltbarkeit deutlich geringer als bei einer Verbindung der Temperatursensoren mit dem Zellverbinder. Diese Verbindung kann beispielsweise durch Ultraschallschweißen realisiert werden, was jedoch auf dem Gehäuse der zumeist lackierten Batteriezelle nicht möglich ist.

### Darstellung der Erfindung

Erfindungsgemäß wird ein mechanischer Platzhalter im Batteriemodul vorgesehen, in welchem eine Temperatursensorik eingebaut ist. Dadurch wird die Möglichkeit eröffnet, die Temperatursensoren genau an die kritischen Stellen innerhalb des Batteriemodules zu platzieren, so dass die auftretenden kritischen Temperaturen auch unverfälscht, nicht durch Fremdeinflüsse verzerrt, gemessen werden und im Modul-Controller, beziehungsweise im Batteriemanagement zur Verfügung stehen. Erfindungsgemäß wird der nachfolgend als Zwischenzelle benannte mechanische Platzhalter in einer Geometrie ausgebildet, die der Geometrie der einzelnen, beispielweise im Schichtaufbau angeordneten, im Wesentlichen als flache Platten ausgeführten Batteriezellen entspricht. Dadurch lässt sich die Zwischenzelle problemlos in einen Schichtaufbau flach ausgebildeter Batteriezellen integrieren; außerdem stellt sich ein Flächenkontakt zwischen der Zwischenzelle, welche die integrierte Temperatursensorik aufnimmt, zu benachbarten, ebenfalls flach ausgebildeten Batteriezellen her, so dass ein guter Wärmeübergang über eine relativ große Kontaktfläche gewährleistet ist.

In einer Ausführungsvariante der erfindungsgemäß vorgeschlagenen Zwischenzelle mit integrierter Temperatursensorik kann diese in Halbschalenbauweise gefertigt werden und zwei Halbschalen umfassen, die nach dem Bestücken mit der Temperatursensorik miteinander zusammengefasst werden, und die einbaufertige Zwischenzelle bilden.

Des Weiteren besteht die Möglichkeit, die Zwischenzelle als Grundelement auszuführen, welches einen Einschub umfasst. In den Einschub kann ein mit Temperatursensoren bestücktes Gegenstück eingeschoben werden, welches nach dem Einschieben dauerhaft im Grundelement einrastet oder in diesem auf andere Art und Weise fixiert werden kann. Schließlich besteht die Möglichkeit, die Zwischenzelle als ein Massivbauteil auszubilden, in dem zum Beispiel im Wege spanabhebender Verfahren Kanäle für die Verkabelung und Vertiefungen zur Aufnahme der Temperatursensoren eingearbeitet werden. Nach Ausbildung der Kabelkanäle und der Vertiefungen zur Aufnahme der Temperatursensoren werden diese anschließend in den massiven Körper eingesetzt und abgedeckt.

Wird die Zwischenzelle, welche die integrierte Temperatursensorik aufnimmt, aus Vollmaterial gefertigt, oder wird diese beispielsweise mit einer geeigneten mechanischen Struktur beispielsweise wabenförmig ausgebildet, kann die Zwischenzelle in besonders vorteilhafter Weise mechanischen Belastungen standhalten. Mechanische Belastungen treten insbesondere dann auf, wenn die Batteriemodule, die eine Anzahl von Batteriezellen umfassen, bei der Herstellung gegeneinander verpresst oder verspannt werden, was in der Regel durch das Anbringen eines mechanischen Rahmens erfolgt. Die dabei auf die Seitenwände der Batteriezellen einwirkenden Kräfte sind relativ hoch, so dass eine in Wabenform oder aus einem Vollmaterial hergestellte Zwischenzelle dem Anpressdruck standhält und den anliegenden Druck homogen weitergibt. Durch das Verspannen des Batteriemodules stellt sich ein besonders inniger Flächenkontakt zwischen Ober- und Unterseite der Zwischenzelle und den an dieser anliegenden benachbarten Batteriezellen ein, so dass ein hervorragender Wärmeübergang durch Wärmeleitung gegeben ist.

Aufgrund des Umstandes, dass die Zwischenzelle an jeder beliebigen Stelle eines Schichtaufbaus eines Batteriemoduls integriert werden kann, ergibt sich die Möglichkeit, die die integrierte Temperatursensorik aufweisende Zwischenzelle an beliebiger Stelle innerhalb des Schichtaufbaus des Batteriemodules einzubauen, oder auch mehrere Zwischenzellen im Schichtaufbau des Batteriemoduls unterzubringen. Die integrierte Temperatursensorik verfügt über Verbindungsleitungen, die seitlich aus der beispielweise rechteckförmig oder quadratisch ausgebildeten Zwischenzelle herausgeführt werden können, so dass die Möglichkeit besteht, die mindestens eine Zwischenzelle mit integrierter Temperatursensorik mit dem Batteriemanagementsystem, bzw. mit einem Modul-Controller zu verbinden. Die erfindungsgemäß vorgeschlagene Lösung bietet den großen Vorteil, die Batteriezellentemperaturen direkt an den Wänden der Batteriezellen einander benachbarten Batteriezellen messen zu können. Bei Bedarf können auch mehrere von den Zwischenzellen in einem Batteriemodul verbaut werden.

In einer weiteren sehr vorteilhaften Ausführungsmöglichkeit der erfindungsgemäß vorgeschlagenen Lösung umfasst die Zwischenzelle ein Kühlsystem beziehungsweise geeignete Anschlüsse, an welche ein flüssigkeitsbasierter Kühlmittelkreislauf angeschlossen werden kann. Um die Zwischenzelle mit darin integrierter Temperatursensorik besonders wirksam temperieren zu können, weist die Zwischenzelle ein Durchströmungskanalsystem auf, welches eben jene Anschlüsse für den flüssigkeitsbasierten Kühlmittelkreislauf umfasst.

Die als mechanischer Platzhalter mit integrierter Temperatursensorik dienende Zwischenzelle kann auch mit zusätzlichen Haltevorrichtungen ausgestattet sein, wodurch ein Batteriemodul, welches mindestens eine Zwischenzelle mit diesen Haltevorrichtungen aufweist, in beliebiger Form mit anderen Batteriemodulen oder anderen Teilen eines Batteriepacks mechanisch verbunden werden kann. So lassen sich die zusätzlichen Haltevorrichtungen beispielweise als Laschen, als Ösen, als Schraub- oder als Klemmverbindungen ausbilden. Daneben besteht die Möglichkeit, auch formschlüssig ausgebildete Verbindungen, beispielsweise in Form eines Schwalbenschwanzes oder einer Schwalbenschwanzverbindung, oder ähnlich ausgeführte Haltevorrichtungen einzusetzen.

Eine Haltevorrichtung, mit welcher beispielsweise zwei komplette jeweils mindestens eine Zwischenzelle aufweisende Batteriemodule miteinander verbunden werden können, ist beispielsweise durch eine Gewindespindel oder eine Gewindestange gegeben. Dazu weist beispielsweise eine flächige Kühleinrichtung, die als Kühlplatte ausgebildet ist, eine Durchgangsöffnung auf, ebenso wie die mindestens eine Zwischenzelle. Fluchten die Durchgangsöffnungen der im Wesentlichen eben ausgebildeten Kühlplatte, und die Durchgangsöffnungen durch die mindestens eine Zwischenzelle im Schichtaufbau des Batteriemodules miteinander, so lassen sich durch eine derartige Gewindestange oder Gewindespindel nicht nur die Batteriezellen und die mindestens eine Zwischenzelle in einem Batteriemodul gegeneinander verspannen, sondern auch die jeweiligen Batteriemodule, jeweils mindestens eine Zwischenzelle umfassend, mit der flächig ausgebildeten Kühleinrichtung. Dadurch wiederum lässt sich eine kompakte Bauweise eines Paares von Batteriemodulen erreichen, die wiederum paarweise Teil eines Batteriepacks sein können.

### Vorteile der Erfindung

Durch die erfindungsgemäß vorgeschlagene Lösung besteht die Möglichkeit, die Temperatursensorik durch einen mechanischen Platzhalter in Form einer Zwischenzelle an den kritischen Stellen des Batteriemodules einzusetzen, so dass die an den kritischsten Stellen des Gehäuses der Batteriezelle auftretenden Temperaturen auch unverfälscht gemessen und an den Modul-Controller und/oder das Batteriemanagementsystem weiter übermittelt werden können. Die erfindungsgemäß vorgeschlagene Lösung erlaubt es, die Temperaturen direkt an den Wänden der Batteriezellen von benachbarten Batteriezellen messen zu können. Durch die erfindungsgemäß vorgeschlagene Lösung besteht auch die Möglichkeit, in einem Batteriemodul mehrere Zwischenzellen mit integrierter Temperatursenorik zu verbauen, so dass dem Modul-Controller beziehungsweise dem Batteriemanagementsystem eine Vielzahl vom Temperaturwerten zur Weiterverarbeitung übermittelt werden können, was die Aussagekräftigkeit von Berechnungen, die auf den Batteriezellenmesstemperaturen basieren, erheblich steigert. Aus Redundanzgründen kann dabei jede der Zwischenzellen mit integrierter Temperatursensorik über ein separates Paar von Verbindungsleitungen verfügen, die jeweils unabhängig voneinander mit dem Batteriemanagementsystem beziehungsweise mit einem Modul-Controller verbunden werden können, so dass die Zuverlässigkeit der Temperaturmessung von Batteriemodulen im Vergleich zu Lösungen gemäß des Standes der Technik erheblich verbessert ist.

Ein weiterer Vorteil der erfindungsgemäß vorgeschlagenen Lösung liegt darin, dass bei einer Messung von Temperaturen auf Zellverbindern bei hohen auftretenden Batterieströmen die Gefahr besteht, dass sich die Zellverbinder aufgrund ihres elektrischen Übergangswiderstandes zu den Zellterminals sehr stark erwärmen. Eine dort gemessene Temperatur entspricht dann nicht mehr der tatsächlich im Inneren der Batteriezelle herrschenden Zelltemperatur. Das Batteriemanagementsystem bzw. der Modulcontroller interpretiert die dort gemessenen Temperaturen am Zellverbinder, jedoch als reale Batteriezellentemperatur, die in diesem Fall zu hoch ist. Das Batteriesystem kann schlimmstenfalls abgeschaltet werden, obwohl die Zelltemperatur eigentlich korrekt ist und nur die Temperatur des Zellverbinders lokal zu hoch sein kann.

Durch die erfindungsgemäß vorgeschlagene Lösung kann dieser Nachteil durch direkte Messung der relevanten Temperaturen an der Außenwand der Batteriezellen behoben werden, Zellverbindungsübergangswiderstände haben somit keinen direkten Einfluss auf die ermittelte Temperatur.

Ein weiterer Vorteil der erfindungsgemäß vorgeschlagenen Lösung liegt darin, dass beispielsweise durch eine Gewindestange bzw. eine anders ausgebildete Haltevorrichtung eine zusätzliche mechanische Integrität erzeugt werden kann, welche die Stabilität gegen mechanische Vibrationen und Schockbelastungen wie sie in einem Kraftfahrzeug während des Betriebes auftreten können, verbessert werden so dass insgesamt gesehen die Sicherheit des Batteriepacks gegen Beschädigungen erheblich verbessert ist.

### Kurze Beschreibung der Zeichnungen

Anhand der Zeichnungen wird die Erfindung nachstehend näher beschrieben. Es zeigt:
- Figur 1: einen Aufbau eines Batteriemodules aus mehreren einzelnen flachbauenden Batteriezellen, die jeweils ein negatives und ein positives Zellterminal aufweisen, gemäß des Standes der Technik,
- Figur 2: den ineinander verspannten Schichtaufbau eines Batteriemodules, aus Batteriezellen, deren negative und positive Zellterminals mit Zellverbindern elektrisch miteinander verschalten sind, gemäß des Standes der Technik,
- Figur 3: eine perspektivische Ansicht eines mechanischen Platzhalters in Gestalt einer Zwischenzelle,
- Figur 4: die Anordnung des mechanischen Platzhalters in Gestalt einer Zwischenzelle gemäß Figur 3 innerhalb eines Schichtaufbaus eines Batteriemoduls,
- Figur 5: den Schichtaufbau des Batteriemoduls mit mindestens einer Zwischenzelle gemäß Figur 4 in zusammengefügtem, d.h. gegeneinander verspanntem Zustand,
- Figur 6: zwei Batteriemodule, die über eine Halteeinrichtung jeweils untereinander verspannt sind und sich an einer gemeinsamen ebenen Kühlplatte abstützen, die ebenfalls von einer als Gewindestange ausgebildeten Halteeinrichtung durchsetzt ist,
- Figur 7.1, 7.2 und 7.3: eine Zwischenzelle mit Durchströmungskanalsystem und Anschlüssen für einen Kühlkreislauf,
- Figuren 8.1, 8.2 und 8.3: eine erfindungsgemäße Zwischenzelle mit Befestigungsmöglichkeit zur nächsten Zwischenzelle,
- Figuren 9.1, 9.2, 9.3 9.4 und 9.5: Zwischenzellen mit verschiedenen Formen von Befestigungsmöglichkeiten zur nächsten Batteriezelle und/oder Zwischenzelle,
- Figuren 10.1, 10.2 und 10.3: eine Zwischenzelle in Halbschalenbauweise mit integrierter Temperatursensorik,
- Figuren 11.1, 11.2 und 11.3: eine erfindungsgemäße Zwischenzelle mit Einschub für eine integrierte Sensorik,
- Figuren 12.1, 12.2 und 12.3: eine Zwischenzelle ohne Befestigungsmöglichkeit zur nächsten Batterie- oder Zwischenzelle mit einem Einschub von Temperatursensoren und
- Figur 13: ein schematischer Aufbau eines Batteriemanagementsystems mit Modulcontrollern und Batteriemodulen, in denen jeweils eine erfindungsgemäße Zwischenzelle aufgenommen ist.

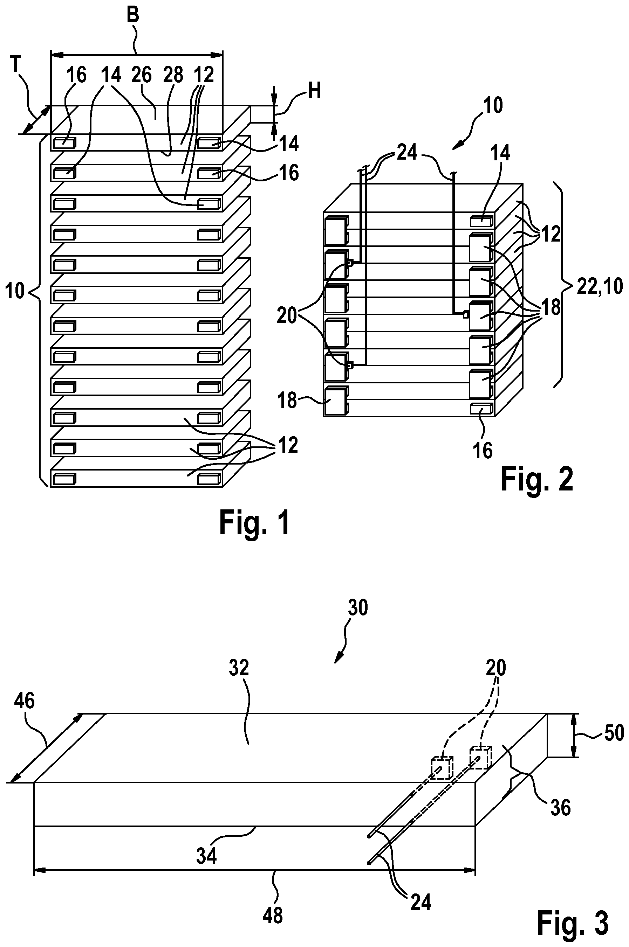

Figur 1 zeigt ein Batteriemodul 10, welches eine Anzahl einzelner flacher Batteriezellen 12 umfasst. Jede der flachen Batteriezellen 12 umfasst ein positives Batteriezellenterminal 14 und ein negatives Batteriezellenterminal 16. Wie aus Figur 1 weiter hervorgeht, weist jede der flachen Batteriezellen 12 eine Oberseite 26 und eine Unterseite 28 auf.

Die in Figur 1 dargestellten einzelnen flachen Batteriezellen 12 werden gemäß Figur 2 zu einem Batteriemodul 10 im Schichtaufbau 22 gefügt. Liegen die einzelnen in dieser Ausführungsvariante im Wesentlichen rechteckförmig ausgebildeten flachen Batteriezellen 12 aneinander an, werden die einzelnen Batteriezellenterminals 14 und 16 über Verbinder 18 elektrisch miteinander verschaltet. Es ergibt sich der kompakte Schichtaufbau 22, wie in Figur 2 dargestellt. An den einzelnen Verbindern 18, welche jeweils ein positives Batteriezellenterminal 14 und ein negatives Batteriezellenterminal 16 miteinander verbinden, sind in der Darstellung gemäß Figur 2 Temperatursensoren 20 angeordnet. Die Temperatursensoren 20 sind über Verbindungsleitungen 24 mit einem in Figur 2 nicht dargestellten Batteriemanagementsystem beziehungsweise mit einem in Figur 2 nicht dargestellten Modul-Controller (CSC) verbunden. Der Nachteil des in Figur 1 und 2 dargestellten Batteriemodules 10 ist darin zu erblicken, dass die Verbinder 18 und mitunter auch die Zellterminals 14, 16 eine nicht zu vernachlässigende thermische Kapazität und einen ebenfalls nicht zu vernachlässigenden thermischen Widerstand besitzen können, so dass die über die Temperatursensoren 20 am Verbinder 18 gemessenen Temperaturen nur sehr ungenau die eigentliche Temperatur der flachen Batteriezellen 12 widerspiegeln. Dies führt zu ungenauen Werten beziehungsweise zu verzögerten Werten der Temperaturanzeige, was schwerwiegende Folgen haben kann.

### Ausführungsvarianten

Figur 3 zeigt den erfindungsgemäß vorgeschlagenen mechanischen Platzhalter in Form einer Zwischenzelle mit integrierter Temperatursensorik.

Aus der perspektivischen Darstellung gemäß Figur 3 geht hervor, dass ein mechanischer Platzhalter, der nachfolgend als Zwischenzelle 30 bezeichnet wird, ein im Wesentlichen rechteckförmiges Aussehen hat. Die Geometrie der Zwischenzelle 30 gemäß der perspektivischen Darstellung in Figur 3 richtet sich bevorzugt nach der Geometrie der Batteriezellen 12, die in einem Batteriemodul 10 verbaut sind. Handelt es sich um ein Batteriemodul 10, welches im Wesentlichen als Schichtaufbau 22 aus einer Vielzahl von flachen Batteriezellen in Rechteckform ausgebildet ist, so wird die Zwischenzelle 30 bevorzugt ebenfalls in Rechteckform ausgebildet, so dass sich diese in den Schichtaufbau 22 des Batteriemodules 10 einfügt. In die Zwischenzelle 30, wie sie in der Darstellung gemäß Figur 3 perspektivisch wiedergegeben ist, ist eine Temperatursensorik 36 integriert. Im vorliegenden Fall umfasst die Temperatursensorik 36 zwei Temperatursensoren 20, die ihrerseits über mindestens eine einzelne Verbindungsleitung 24 verfügen, die an einer Längsseite der flachbauenden Zwischenzelle 30 aus dieser hinausgeführt ist. Die Integration der Temperatursensorik 36 in den Körper der Zwischenzelle 30 kann auf verschiedene Art und Weise erfolgen.

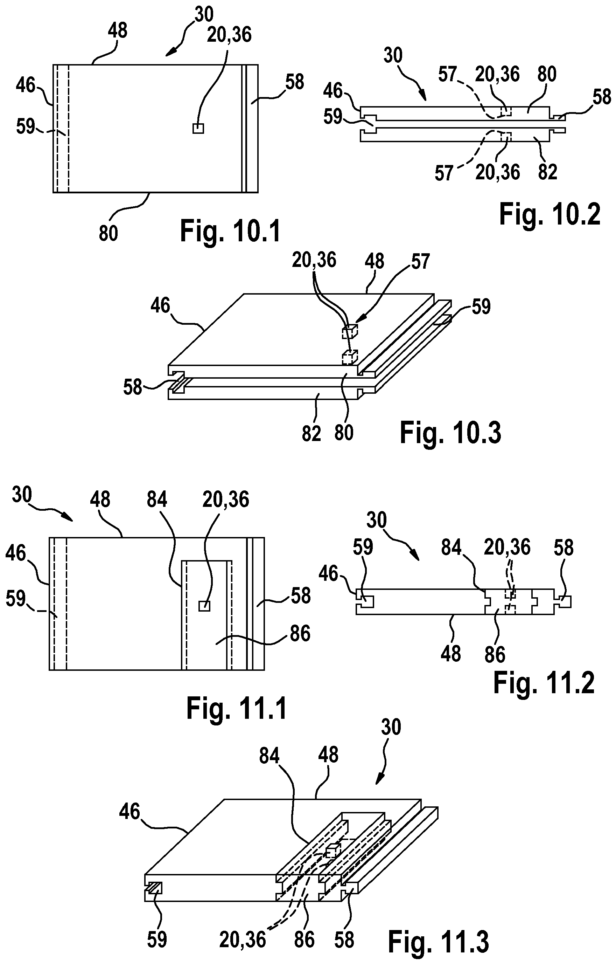

Die in Figur 3 in perspektivischer Ansicht wiedergegebene Zwischenzelle 30 kann durch 2 Halbschalen (vgl. Figur 10.1 bis 10.3) dargestellt werden, die nach der Bestückung mit Temperatursensoren 20 zusammengefügt werden. Die Verbindungsleitungen 24 der einzelnen Temperatursensoren 20 können an der Längsseite der Zwischenzelle 30 seitlich aus dieser herausgeführt werden. Daneben besteht alternativ die Möglichkeit, die Zwischenzelle 30 als Grundelement auszubilden, welches einen Einschub (vgl. Figur 11.1 bis 11.3) aufweist. In diesen Einschub wird nach Art einer Schublade ein passendes, mit Temperatursensoren 20, welche die integrierte Temperatursensorik 36 bilden, bestücktes Gegenstück eingeschoben. Nach dem Einschieben des mit den Temperatursensoren 20 versehenen komplementär zur Einschuböffnung ausgebildeten Gegenstücks kann dieses eingeschobene Element im Grundelement der Zwischenzelle 30 dauerhaft verrastet werden, oder kann in seiner eingeschobenen Position auf andere Weise fixiert werden. Es besteht alternativ auch die Möglichkeit, die Zwischenzelle 30 als massiven Körper auszubilden. In diesen können beispielsweise im Wege von spanabhebenden Verfahren Kanäle für das mindestens eine Verbindungskabel 24 sowie Vertiefungen, die der Aufnahme der Temperatursensoren 20 dienen, eingearbeitet werden. Nach Ausbildung der Kanäle für das mindestens eine Verbindungskabel 24 und entsprechender Vertiefungen 57 (vgl. Fig. 10.2) zur Aufnahme der Temperatursensoren 20 können diese in einen derartigen massiven Körper eigensetzt werden, und an der Oberseite verschlossen werden, so dass sich eine ebene Oberfläche des massiven Körpers ergibt. Bei Ausgestaltung der Zwischenzelle 30 als massiver Körper, kann auch ein Durchströmungskanalsystem zur Temperierung der Zwischenzelle 30 in dieses eingearbeitet sein, beziehungsweise können an der kurzen oder an den langen Stirnseiten Anschlüsse für flüssigkeitsbasierte Kühlmittelkreisläufe vorgesehen werden.

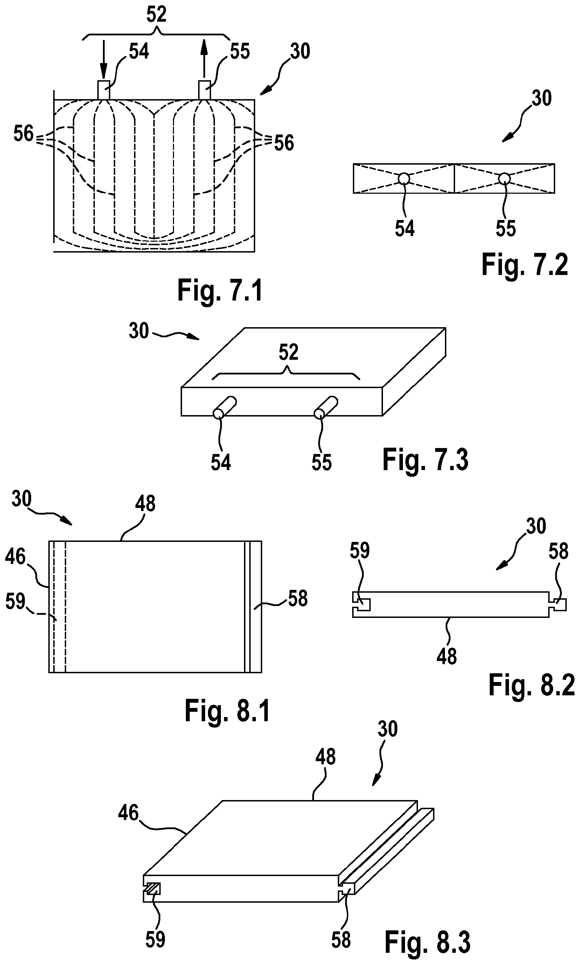

Die in Figur 3 in perspektivischer Ansicht dargestellte Zwischenzelle 30 kann des Weiteren mit zusätzlichen Haltevorrichtungen versehen sein. Dadurch kann je nach Anzahl von in einem Batteriemodul 10 verbauten Zwischenzellen 30 zur Messung von kritischen Temperaturen, ein Batteriemodul 10 in beliebiger Form mit anderen Batteriemodulen 10, 72 oder Teilen eines Batteriepacks mechanisch verbunden werden. Die zusätzlichen Haltevorrichtungen der als mechanischer Platzhalter mit integrierter Temperatursensorik 36 dienenden Zwischenzelle 30 können beispielsweise als Laschen, als Ösen oder als Schraub- und Klemmverbindungen ausgestaltet sein, so dass sich eine Zwischenzelle 30 mit anderen Batteriemodulen 10 mechanisch verbinden lässt. Auch formschlüssige Haltevorrichtungen, wie in den Figuren 8.1 bis 8.3, Figuren 9.1 bis 9.5, Figuren 10.1 bis 10.3 und Figuren 11.1 bis 11.3 gezeigt, sind möglich.

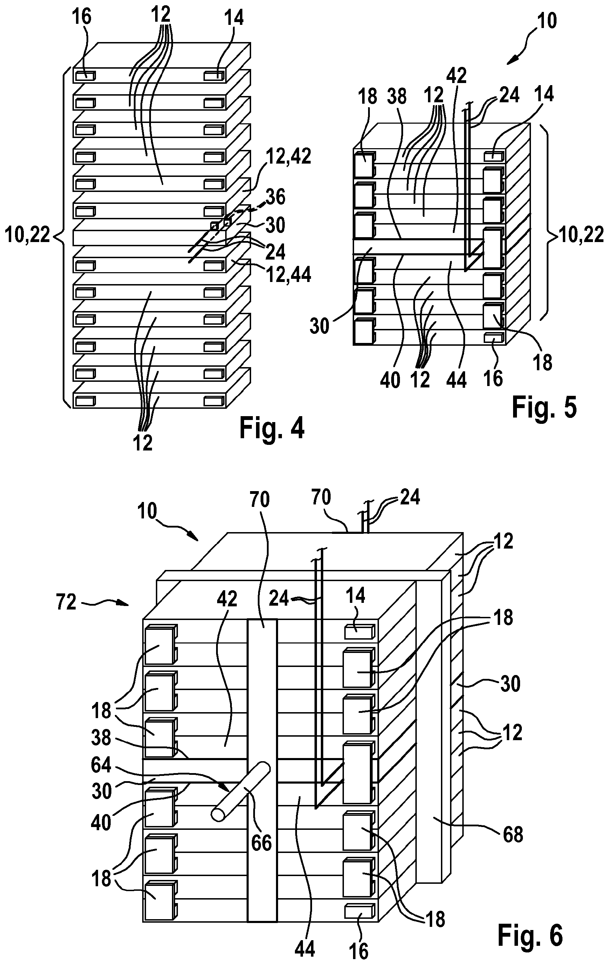

Figur 4 zeigt einen Schichtaufbau des Batteriemodules, umfassend mehrere flachbauende Batteriezellen und mindestens eine als mechanischer Platzhalter mit integrierter Temperatursensorik dienende Zwischenzelle.

Figur 4 zeigt, dass in dieser Ausführungsvariante der Batteriezelle 10 als Schichtaufbau 22 eine Zwischenzelle 30 - wie in Figur 3 perspektivisch dargestellt - im Schichtaufbau 22 des Batteriemoduls 10 aufgenommen ist. Die in Figur 4 dargestellte Zwischenzelle 30 ist in einer Breite 46, einer Länge 48 und einer Höhe 50 ausgebildet (vgl. Figur 3), die der Geometrie der im Schichtaufbau 22 gemäß der Explosionsdarstellung in Figur 4 eingesetzten flachen Batteriezellen 12 entspricht. Die die integrierte Temperatursensorik 36 aufweisende mindestens eine im Batteriemodul 10 verbaute Zwischenzelle 30, weist zwei Temperatursensoren 20 auf, deren mindestens eine Verbindungsleitung 24 jeweils über die Längsseite der Zwischenzelle 30 nach außen geführt sind.

Figur 5 zeigt das Batteriemodul gemäß Figur 4 im Schichtaufbau im montierten Zustand. Aus der Darstellung gemäß Figur 5 geht hervor, dass die einzelnen rechteckförmig ausgebildeten flachen Batteriezellen 12 mit ihren Ober- beziehungsweise Unterseiten 26, 28 aneinander anliegen. Die einzelnen positiven beziehungsweise negativen Batteriezellenterminals 14, 16 sind mit Verbindern 18 elektrisch miteinander verbunden.

In den Schichtaufbau 22 des Batteriemoduls 10 gemäß der Darstellung in Figur 5 ist die Zwischenzelle 30 in der Mitte integriert. Die Zwischenzelle 30 liegt mit ihrer Oberseite 32 (vgl. Fig. 3) an einer Zellwand 38 einer ersten benachbarten Batteriezelle 42 und mit ihrer Unterseite 34 (vgl. Fig. 3) an einer Zellwand 40 einer zweiten benachbarten Batteriezelle 44 an. Dies bedeutet, dass die in die rechteckförmig ausgebildete als mechanische Platzhalter mit integrierter Temperatursensorik 36 dienende Zwischenzelle 30 einen sehr guten Oberflächenkontakt mit den jeweils benachbarten Zellen 42 und 44 aufweist und die über die integrierte Temperatursensorik 36 sensierten Temperaturen im hohen Maße den tatsächlich in den benachbarten Batteriezellen 42 und 44 herrschenden Temperaturen entsprechen.

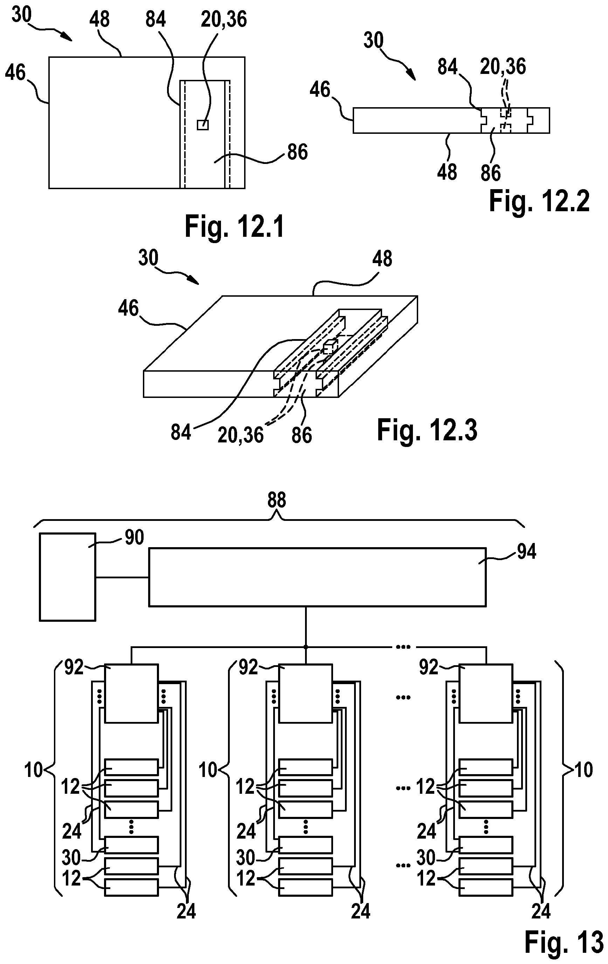

Durch die erfindungsgemäß vorgeschlagene Lösung wird ausgeschlossen, dass Temperaturmesswerte durch die den positiven und negativen Batteriezellenterminals 14 und 16 jeweils innenwohnenden thermischen Kapazitäten, oder durch die Zellverbinder 18 selbst aufgrund ihrer thermischen Kapazität und ihres thermischen Widerstands verfälschen. Mithin gelangen durch die erfindungsgemäß vorgeschlagene Lösung die unverfälschten Temperaturen, die - im Ausführungsbeispiel gemäß Figur 5 - durch die hier im Schichtaufbau 22 angeordnete Zwischenzelle 30 gemessen werden, unverfälscht an das Batteriemanagementsystem (vgl. Figur 13), beziehungsweise an den Modul-Controller (vgl. Figur 13). Die Aussagekraft der durch die Zwischenzelle 30 aufgenommenen Temperaturwerte ist somit durch die erfindungsgemäß vorgeschlagene Lösung erheblich verbessert, verglichen mit Lösungen aus dem Stande der Technik.

Der Darstellung gemäß Figur 6 ist ein Verbund einander an einem ebenen Kühlelement verspannter Batteriemodule zu entnehmen. Aus der perspektivischen Darstellung gemäß Figur 6 ergibt sich, dass zwei gemäß Figur 5 als Schichtaufbau 22 beschaffene Batteriemodule 10, 72 mittels einer Verspannungseinrichtung 64 mit einem eben ausgebildeten als Kühlplatte 68 beschaffenen Kühlelement verspannt sind. Die Verspannung der einzelnen Batteriemodule 10 bzw. 72 mit ihren Planseiten gegen die Kühlplatte 68 erfolgt über die Verspannungseinrichtung 64, die in der Ausführungsvariante gemäß Figur 6 eine Gewindestange 66 umfasst. Dazu sind sowohl die Kühlplatte 68 als auch die Zwischenzellen 30 der beiden gegen die Kühlplatte 68 verspannten Batteriemodule 10 bzw. 72 mit Durchgangsöffnungen versehen. Durch diese Durchgangsöffnungen wird die Verspannungseinrichtung 64, beispielsweise die Gewindestange 66 durchgeschoben, danach werden die beiden Module 10 bzw. 72, durch eine mechanische Schnittstelle 70 - ausgebildet als laschenförmiger Übergriff - mit ihren jeweils der Kühlplatte 68 zuweisenden Längsseiten gegen diese verspannt. Dadurch lässt sich ein Kühlungseffekt erreichen, da beispielsweise die Kühlplatte 68 mit einem Durchströmungskanalsystem versehen sein kann, ebenso wie das Innere des Körpers der Zwischenzelle 30. Aus der Darstellung gemäß Figur 6 ergibt sich ein Verbund aus zwei Batteriemodulen 10 beziehungsweise 72, die jeweils eine Zwischenzelle 30 mit einer integrierten Temperatursensorik 36 aufweisen, die gegen die Kühlplatte 68, die Teil eines flüssigkeitsbasierten Kühlkreislaufes sein kann, verspannt sind. Durch die Verspannungseinrichtung 64 wird der Flächenkontakt der Batteriemodule 10, 72 zur Kühlplatte 68 verbessert, so dass die Wärmeleitung steigt.

Der Verbund aus einem Paar von Batteriemodulen 10 beziehungsweise 72, der in der perspektivischen Ansicht gemäß Figur 6 dargestellt ist, lässt sich wiederum in ein Batteriepack, der eine größere Anzahl von Batteriemodulen umfassen kann, integrieren und stellt somit eine Vorbaustufe eines Batteriepacks zum Einsatz in einem Batteriesystem zum Beispiel zum Antrieb eines Elektro- oder Hybridfahrzeuges dar.

Die Figuren 7.1 bis 7.3 zeigen die erfindungsgemäß vorgeschlagene Zwischenzelle mit einem Kühlsystem.

Ein Kühlsystem 52 der Zwischenzelle 30 umfasst Anschlüsse 54, 55 für einen flüssigkeitsbasierten Kühlkreislauf. Das Innere der Zwischenzelle 30 ist mit einem Kanalsystem aus Kanälen 56 versehen, welches vom Fluid, welches innerhalb des flüssigkeitsbasierten Kühlkreislaufes umgewälzt wird, durchströmt wird und Wärme aus der Zwischenzelle 30 abführt. Da diese, wie vorstehend im Zusammenhang mit den Figuren 4, 5 und 6 beschrieben, in einem Schichtaufbau 22 eingebettet ist, kann die Wärme benachbarter Batteriezellen 42, 44 effektiv über das im flüssigkeitsbasierten Kühlkreislauf zirkulierende Kühlmedium aus dem Schichtaufbau 22 abgeführt werden. Somit besteht eine effektive Kühlungsmöglichkeit für die im Schichtaufbau 22 angeordneten, beispielsweise flach ausgebildeten, Batteriezellen 12.

Die Ansicht gemäß Figur 7.2 zeigt, dass die Anschlüsse 54, 55 an der Längsseite der Zwischenzelle 30 angeordnet sind, wie ebenfalls aus der perspektivischen Draufsicht auf die Zwischenzelle 30 gemäß der Figur 7.3 hervorgeht.

Der Figurensequenz der Figuren 8.1 bis 8.3 sind Ausführungsmöglichkeiten zusätzlicher Haltevorrichtungen zu entnehmen. Die Figuren 8.1, 8.2 und 8.3 zeigen, dass die Zwischenzelle 30 mit zusätzlichen Haltevorrichtungen 58 bzw. 59 versehen ist. Die erste Haltevorrichtung 58 ist hier beispielsweise als quadratisch konfigurierter Vorsprung in Form eines Zapfens konfiguriert, welcher mit einem dementsprechenden Gegenstück, d.h. einer zweiten Haltevorrichtung 59, die komplementär zur ersten Haltevorrichtung 58 ausgebildet ist, korrespondiert. Die Zwischenzellen 30 oder auch benachbarte flachbauende Batteriezellen 12 können durch die in Figur 8.1 bis 8.3, hier als formschlüssige zusätzliche Haltevorrichtungen ausgebildeten Verbindungselemente miteinander in beliebiger Abfolge gekoppelt werden.

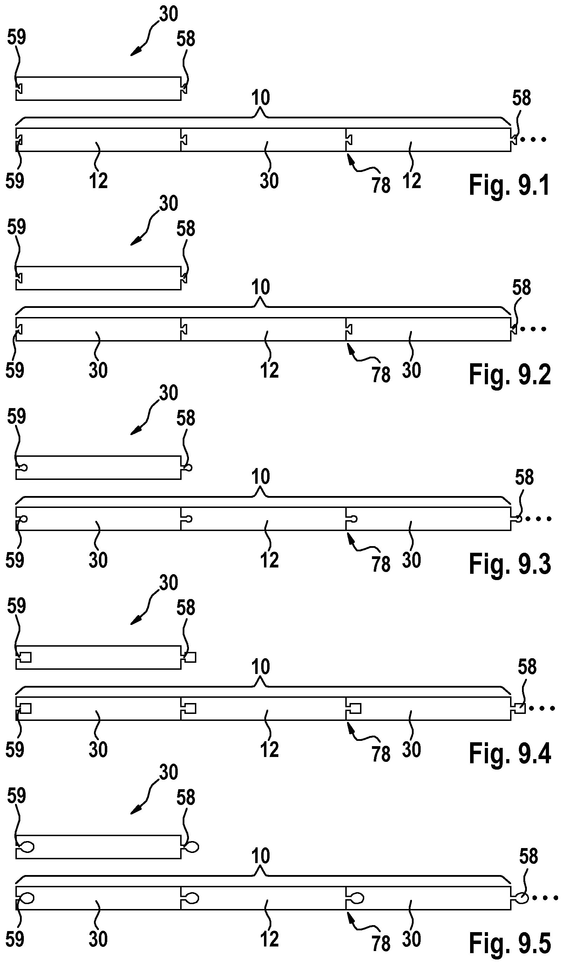

Die Figuren 9.1 bis 9.5 zeigen verschiedene Ausführungsmöglichkeiten der zusätzlichen Haltevorrichtungen.

Aus der Darstellung gemäß Figur 9.1 geht hervor, dass ein Batteriemodul 10, welches mindestens eine Zwischenzelle 30 enthält, mit Haltevorrichtungen 58, 59 ausgeführt sein kann, die beispielsweise ein knopfförmiges Aussehen haben. Gleiches gilt für die Ausführungsmöglichkeit von Haltevorrichtungen 58, 59 zur Herstellung eines Batteriemodules 10 gemäß der Figur 9.2.

Gemäß der Ausführungsvariante, die in Figur 9.3 dargestellt ist, sind die zusätzlichen Haltevorrichtungen 58 bzw. 59 mit einer im Wesentlichen kreisförmiger Kontur ausgeführt. Figur 9.4 zeigt Haltevorrichtungen 58, 59, die komplementär zueinander im Wesentlichen quadratisch ausgeführt sind. Die in der Figur 9.5 dargestellte Ausführungsmöglichkeit von Haltevorrichtungen 58, 59 ist durch einen ovalen Querschnitt der Haltevorrichtung 58, 59 charakterisiert. Neben den in der Figurensequenz der Figuren 9.1 bis 9.5 dargestellten Ausführungsmöglichkeit von zusätzlichen Haltevorrichtungen, bestehen zahlreiche Abwandlungen, um innerhalb der Batteriemodule 10 mindestens eine erfindungsgemäß vorgeschlagene Zwischenzelle 30 mit beispielsweise flachbauenden Batteriezellen 12 zu verbinden. In den Figuren 9.1 - 9.5 ist ein fugenloser Flächenkontakt zwischen Zwischenzellen 30 und Batteriezellen 12 mit Bezugszeichen 78 gekennzeichnet.

Figuren 10.1 bis 10.3 zeigen eine erfindungsgemäß vorgeschlagene Zwischenzelle in Halbschalenbauweise. Aus der Darstellung gemäß Figur 10.1 geht hervor, dass eine erste Halbschale 80 mit der Zwischenzelle 30 eine lange Seite 74 und eine kurze Seite 76 aufweist. In die erste Halbschale 80 ist beispielsweise, vergleiche Darstellung gemäß Figur 10.2, eine Vertiefung 57 integriert, in welcher ein Temperatursensor 20, der Teil der integrierten Temperatursensorik 36 ist, eingelassen ist. Gemäß Figur 10.2 bilden die erste Halbschale 80 und eine weitere zweite Halbschale 82 die Zwischenzelle 30. In den einander zuweisenden Seiten der beiden Halbschalen 80, 82 sind entsprechende Geometrien für die zusätzlichen Haltevorrichtungen 58 und 59 jeweils an der kurzen Seite 76 ausgebildet. Aus der perspektivischen Ansicht gemäß Figur 10.3 ergibt sich der Längsverlauf beider Haltevorrichtungen 58 bzw. 59, die an der kurzen Seite 56 der Zwischenzelle 30 ausgeführt sind. Anstelle der in Figuren 10.3 dargestellten quadratischen Geometrie der ersten und der zweiten zusätzlichen Haltevorrichtungen 58 bzw. 59, können die Haltevorrichtungen auch jede beliebige andere Geometrie, beispielsweise die in den Figuren 9.1 bis 9.5 dargestellten, aufweisen.

Die Figuren 11.1 bis 11.3 zeigen eine erfindungsgemäß vorgeschlagene Zwischenzelle, die einen Einschub enthält.

Figur 11.1 zeigt, dass die hier aus massivem Vollmaterial gefertigte Zwischenzelle 30 einen Hohlraum 84 aufweist. In diesen Hohlraum 84 ist ein komplementär zur Geometrie des Hohlraums 84 ausgebildeter Einschub 86 eingeschoben. Im Einschub 86 befindet sich mindestens ein Temperatursensor 20, der Teil einer integrierten Temperatursensorik 36 ist. Auch in der Ausführungsvariante gemäß Figur 11.1 befinden sich zusätzliche Haltevorrichtungen 58, 59 jeweils an den kurzen Seiten 76 der Zwischenzelle 30.

Figur 11.2 zeigt die Seitenansicht der Zwischenzelle 30 gemäß Figur 11.1. Aus Figur 11.2 geht hervor, dass die zusätzlichen Haltevorrichtungen 58, 59 hier im Wesentlichen in quadratischer Geometrie ausgeführt sind und sich leicht außermittig der Zwischenzelle 30 der Einschub 86 befindet. Dieser kann ein oder auch mehrere Temperatursensoren 20, die jeweils Teil der integrierten Temperatursensorik 36 sind, enthalten.

Figur 11.3 zeigt die perspektivische Draufsicht auf die Zwischenzelle 30 gemäß der Figuren 11.1 und 11.2. Aus Figur 11.3 geht hervor, dass der Einschub 86, der komplementär zur Geometrie des Hohlraums 84 ausgeführt ist, nicht die komplette Breite, parallel zur kurzen Seite 76 der Zwischenzelle 30 durchsetzt, sondern nur teilweise in die Zwischenzelle 30 eingeschoben und dort beispielsweise über eine formschlüssige Verbindung verrastet sein kann. Anstelle der formschlüssigen Verbindung sind auch andere Befestigungsmöglichkeiten möglich, so beispielsweise ein Presssitz, um den Einschub 86 im Hohlraum 84 der Zwischenzelle 30 zu befestigen.

Figuren 12.1 bis 12.3 zeigen eine Zwischenzelle 30, die ebenfalls die lange Seite 74 und die kurze Seite 76 aufweist. Auch die Zwischenzelle 30 gemäß der Figuren 12.1 bis 12.3 umfasst einen Hohlraum 84, welcher den Einschub 86 aufnimmt. Dieser umfasst wie vorstehend bereits im Zusammenhang mit den Figuren 11.1 bis 11.3 beschrieben, mindestens einen Temperatursensor 20, der Teil einer integrierten Temperatursensorik 36 ist. Die Zwischenzelle 30 gemäß der Figurensequenz der Figuren 12.1 bis 12.3 ist ohne zusätzliche Haltevorrichtungen jeweils an den kurzen Seiten 76 ausgeführt.

Figur 13 zeigt die erfindungsgemäß vorgeschlagene Zwischenzelle integriert in ein Batteriemanagementsystem. Ein Batteriemanagementsystem 88 umfasst neben einer Battery Control Unit (BCU) eine Anzahl von Modulcontrollern 92 (CSC). Die Anzahl der Modulcontroller 92 richtet sich nach der Anzahl der zu überwachenden Batteriemodule 10. Der Modulcontroller 92 steuert die hier beispielsweise im Schichtaufbau angeordneten flachen Batteriezellen 12. Ein jedes der Batteriemodule 10 umfasst mindestens eine erfindungsgemäß vorgeschlagene, als mechanischer Platzhalter dienende Zwischenzelle 30. Die integrierte Temperatursensorik 36, ein oder mehrere Temperatursensoren 20 umfassend, sind mit mindestens einem Verbindungskabel 24 mit dem Modulcontroller 92 verbunden. Gleiches gilt für die flachen Batteriezellen 12, die jeweils über Verbindungsleitungen mit dem Modulcontroller 92 verbunden sind. Die Modulcontroller 92 ihrerseits stehen mit der BCU 94 in Verbindung, der zusätzliche elektronische Einrichtungen, wie beispielsweise ein in Figur 13 dargestellter zusätzlicher Stromsensor 90 zugeordnet sein können.

Die im Batteriemanagementsystem 88 gemäß der Figur 13 dargestellten Komponenten sind nur schematisch angedeutet. So besteht die Möglichkeit, im Batteriemanagementsystem 88 je nach Ausbaustufe eine Vielzahl weiterer Komponenten unterzubringen.

Verbindung, der zusätzliche elektronische Einrichtungen, wie beispielsweise ein in Figur 13 dargestellter zusätzlicher Stromsensor 90 zugeordnet sein können.

Die im Batteriemanagementsystem 88 gemäß der Figur 13 dargestellten Komponenten sind nur schematisch angedeutet. So besteht die Möglichkeit, im Batteriemanagementsystem 88 je nach Ausbaustufe eine Vielzahl weiterer Komponenten unterzubringen.

## Patentansprüche

1. Batteriemodul (10, 72) mit einer Anzahl elektrisch miteinander verschalteter Batteriezellen (12), die über Verbinder (18) elektrisch miteinander verschaltet sind, wobei dem Batteriemodul (10) eine Anzahl von Temperatursensoren (20) zugeordnet ist, wobei das Batteriemodul (10, 72) mindestens eine Zwischenzelle (30) mit integrierter Temperatursensorik (36)), die Temperatursensoren (20) umfassend, und ein Kühlsystem (52) umfasst, **dadurch gekennzeichnet, dass**
die Geometrie der Zwischenzelle (30) der Geometrie der einzelnen in Schichtaufbau (22) angeordneten Batteriezellen (12) entspricht.

2. Batteriemodul gemäß Anspruch 1, **dadurch gekennzeichnet, dass** innerhalb des Schichtaufbaus (22) des Batteriemoduls (10) mindestens eine Zwischenzelle (30) an Zellwänden (38, 40) benachbarter Batteriezellen (42, 44) anliegt.

3. Batteriemodul, gemäß einem der vorhergehenden Ansprüche, **dadurch gekennzeichnet, dass** die Zwischenzelle (30) Halbschalen (80, 82) umfasst, welche nach Bestückung mit den Temperatursensoren (20) miteinander zur Zwischenzelle (30) gefügt werden.

4. Batteriemodul gemäß einem der Ansprüche 1 bis 3, **dadurch gekennzeichnet, dass** die Zwischenzelle (30) einen Hohlraum (84) umfasst, in welchen ein komplementär ausgeführter Einschub (86) mit der Temperatursensorik (36) eingeschoben und fixiert ist.

5. Batteriemodul gemäß einem der Ansprüche 1 bis 3, **dadurch gekennzeichnet, dass** die Zwischenzelle (30) ein Massivbauteil ist, in welchem Kanäle (56) und Vertiefungen (57) zur Aufnahme der Temperatursensoren (20) eingearbeitet sind.

6. Batteriemodul gemäß einem der vorhergehenden Ansprüche, **dadurch gekennzeichnet, dass** Verbindungsleitungen (24) der integrierten Temperatursensorik (36) der Zwischenzelle (30) mit einem Batteriemanagementsystem (88) und/oder einem Modul-Controller (92) verbunden sind.

7. Batteriemodul gemäß einem der vorhergehenden Ansprüche, **dadurch gekennzeichnet, dass** die Batteriezellen (12) im Schichtaufbau (22) mit einer Verspannungseinrichtung (64) gegeneinander verspannt sind.

8. Batteriemodul gemäß dem vorhergehenden Anspruch, **dadurch gekennzeichnet, dass** die Verspannungseinrichtung (64) eine Gewindespindel oder eine Gewindestange (66) umfasst.

9. Batteriemodul gemäß einem der vorhergehenden Ansprüche, **dadurch gekennzeichnet, dass** mindestens eine Zwischenzelle (30) ein Kühlsystem (52) und Anschlüsse (54, 55) für einen flüssigkeitsbasierten Kühlkreislauf umfasst.

10. Batteriemodul gemäß einem der vorhergehenden Ansprüche, **dadurch gekennzeichnet, dass** die Zwischenzelle (30) ein Kanalsystem (56) umfasst, durch welches ein Kühlmedium strömt.

11. Batteriemodul gemäß einem der vorhergehenden Ansprüche, **dadurch gekennzeichnet, dass** die Zwischenzelle (30) zusätzliche Halteeinrichtungen (58, 59) zur Verbindung mit Batteriezellen (12) innerhalb eines Batteriemoduls (72) umfasst.

12. Verbund aus Batteriemodulen (10, 72) gemäß der Ansprüche 1 bis 11, **dadurch gekennzeichnet, dass** zwischen den Batteriemodulen (10, 72) ein ebenes Kühlelement (68), insbesondere eine Kühlplatte, angeordnet ist, die eine Zellenwand (38, 40) flacher Batteriezellen (12) kontaktiert.

## Claims

1. Battery module (10, 72) having a number of battery cells (12) which are electrically connected to one another and are electrically connected to one another by means of connectors (18), wherein a number of temperature sensors (20) are assigned to the battery module (10), wherein the battery module (10, 72) comprises at least one intermediate cell (30) with an integrated temperature sensor system (36), comprising the temperature sensors (20), and a cooling system (52), **characterized in that** the geometry of the intermediate cell (30) corresponds to the geometry of the individual battery cells (12) which are arranged in a layered structure (22).

2. Battery module according to Claim 1, **characterized in that** within the layered structure (22) of the battery module (10) at least one intermediate cell (30) bears against cell walls (38, 40) of adjacent battery cells (42, 44).

3. Battery module according to one of the preceding claims, **characterized in that** the intermediate cell (30) comprises half shells (80, 82) which, after being equipped with the temperature sensors (20), are joined together to form the intermediate cell (30).

4. Battery module according to one of Claims 1 to 3, **characterized in that** the intermediate cell (30) comprises a cavity (84) into which an insert (86), which is embodied in a complementary fashion, is inserted with the temperature sensor system (36) and secured.

5. Battery module according to one of Claims 1 to 3, **characterized in that** the intermediate cell (30) is a solid component in which channels (56) and depressions (57) for accommodating the temperature sensors (20) are formed.

6. Battery module according to one of the preceding claims, **characterized in that** connecting lines (24) of the integrated temperature sensor system (36) of the intermediate cell (30) are connected to a battery management system (88) and/or to a module controller (92) .

7. Battery module according to one of the preceding claims, **characterized in that** the battery cells (12) are clamped against one another with a clamping device (64) in the layered structure (22).

8. Battery module according to the preceding claim, **characterized in that** the clamping device (64) comprises a threaded spindle or a threaded rod (66).

9. Battery module according to one of the preceding claims, **characterized in that** at least one intermediate cell (30) comprises a cooling system (52) and connections (54, 55) for a fluid-based cooling circuit.

10. Battery module according to one of the preceding claims, **characterized in that** the intermediate cell (30) comprises a duct system (56) through which a cooling medium flows.

11. Battery module according to one of the preceding claims, **characterized in that** the intermediate cell (30) comprises additional retaining devices (58, 59) for connecting to battery cells (12) within a battery module (72).

12. Combination comprising battery modules (10, 72) according to Claims 1 to 11, **characterized in that** a planar cooling element (68), in particular a cooling plate, which makes contact with a cell wall (38, 40) of flat battery cells (12), is arranged between the battery modules (10, 72).

## Revendications

1. Module de batterie (10, 72) comprenant une pluralité de cellules de batterie (12) connectées électriquement entre elles, lesquelles sont connectées électriquement entre elles par le biais de connecteurs (18), une pluralité de sondes de température (20) étant associée au module de batterie (10, 72), le module de batterie (10, 72) comportant au moins une cellule intermédiaire (30) avec système de détection de température (36) intégré, comportant les sondes de température (20), et un système de refroidissement (52), **caractérisé en ce que** la géométrie de la cellule intermédiaire (30) correspond à la géométrie des cellules de batterie (12) individuelles disposées selon une structure en couches (22).

2. Module de batterie selon la revendication 1, **caractérisé en ce qu'**à l'intérieur de la structure en couches (22) du module de batterie (10), au moins une cellule intermédiaire (30) repose contre les parois de cellule (38, 40) des cellules de batterie (42, 44) voisines.

3. Module de batterie selon l'une des revendications précédentes, **caractérisé en ce que** la cellule intermédiaire (30) comporte des demi-coques (80, 82) qui, après avoir été équipées des sondes de température (20), sont assemblées entre elles pour former la cellule intermédiaire (30).

4. Module de batterie selon l'une des revendications 1 à 3, **caractérisé en ce que** la cellule intermédiaire (30) comporte un espace creux (84) dans lequel est inséré et fixé un dispositif insérable (86) exécuté complémentaire et pourvu du système de détection de température (36).

5. Module de batterie selon l'une des revendications 1 à 3, **caractérisé en ce que** la cellule intermédiaire (30) est un élément structural massif dans lequel sont pratiqués des canaux (56) et des évidements (57) servant à accueillir les sondes de température (20).

6. Module de batterie selon l'une des revendications précédentes, **caractérisé en ce que** les lignes de liaison (24) du système de détection de température (36) intégré de la cellule intermédiaire (30) sont reliées à un système de gestion de batterie (88) et/ou un contrôleur de module (92).

7. Module de batterie selon l'une des revendications précédentes, **caractérisé en ce que** les cellules de batterie (12) dans la structure en couches (22) sont serrées les unes contre les autres avec un dispositif de serrage (64).

8. Module de batterie selon l'une des revendications précédentes, **caractérisé en ce que** le dispositif de serrage (64) comporte une broche filetée ou une tige filetée (66).

9. Module de batterie selon l'une des revendications précédentes, **caractérisé en ce qu'**au moins une cellule intermédiaire (30) comporte un système de refroidissement (52) et des raccords pour un circuit de refroidissement à base de liquide.

10. Module de batterie selon l'une des revendications précédentes, **caractérisé en ce que** la cellule intermédiaire (30) comporte un système de canal (56) à travers lequel s'écoule un fluide de refroidissement.

11. Module de batterie selon l'une des revendications précédentes, **caractérisé en ce que** la cellule intermédiaire (30) comporte des dispositifs de maintien (58, 59) supplémentaires servant à une liaison avec les cellules de batterie (12) à l'intérieur d'un module de batterie (72).

12. Assemblage de modules de batterie (10, 72) selon les revendications 1 à 11, **caractérisé en ce qu'**un élément de refroidissement (68) plat, notamment une plaque de refroidissement, est disposé entre les modules de batterie (10, 72), lequel est en contact avec une paroi de cellule (38, 40) des cellules de batterie plates.
